Europäisches Patentamt

European Patent Office

Office européen des brevets

(19)

(11) Publication number: **0 002 379**
**B1**

(12)                          **EUROPEAN PATENT SPECIFICATION**

(45) Date of publication of patent specification: **07.04.82**

(51) Int. Cl.³: **F 01 L 13/02, F 16 C 3/14**

(21) Application number: **78300733.9**

(22) Date of filing: **04.12.78**

(54) A reversing mechanism for a reciprocating combustion engine.

| | |
|---|---|
| (30) Priority: **05.12.77 DK 5403/77** | (73) Proprietor: **B & W DIESEL A/S**<br>**No.2 Torvegade**<br>**DK-1400 Copenhagen K (DK)** |
| (43) Date of publication of application:<br>**13.06.79 Bulletin 79/12** | (72) Inventor: **Ytterdal, Hjalmar**<br>**No. 26 Thóger Larsens Allé**<br>**DK-2750 Ballerup (DK)** |
| (45) Publication of the grant of the patent:<br>**07.04.82 Bulletin 82/14** | (74) Representative: **Jones, Alan John et al,**<br>**CARPMAELS & RANSFORD 43 Bloomsbury**<br>**Square**<br>**London, WC1A 2RA (GB)** |
| (84) Designated Contracting States:<br>**BE CH DE FR GB IT NL SE** | |
| (56) References cited:<br>**DE - B - 1 303 585**<br>**DE - C - 583 156**<br>**GB - A - 1 096 405**<br>**GB - A - 1 408 325** | |

Courier Press, Leamington Spa, England.

### A reversing mechanism for a reciprocating combustion engine

The present invention relates to a reversing mechanism for a reciprocating combustion engine, such as a ship's engine, having a control shaft to which there are secured cams for controlling the fuel injection and/or valves in the engine cylinders, said reversing mechanism comprising a lost-motion coupling connecting the control shaft to the crankshaft of the engine and including a first coupling part in the form of a driving wheel connected to the crankshaft, a second coupling part in the form of a driver rigidly connected to the control shaft, and at least one rotary-piston hydraulic motor mounted in one of the coupling parts with the axis of rotation of the piston arranged eccentrically to the axis of the control shaft, the piston of said hydraulic motor being rigidly connected with the main journal pin of a reversing crank, the eccentric crank pin of which if rotatably journalled in a shoe slidingly displaceable within a guide way in the other coupling part, the reversing crank being supported by plain bearings in end walls of the hydraulic motor and in the sliding shoe, respectively.

A reversing mechanism of this kind is disclosed in British Patent Specification No. 1 408 325. When the combustion engine is to be reversed one chamber of each hydraulic motor is connected to a source of hydraulic liquid at high pressure, e.g. 30 to 40 bar, and when the or each reversing crank is consequently turned from one end position to its other end position, the two coupling parts are turned relative to one another through an angle. Consequently, the angular position of the control shaft and the cams secured thereto relative to the crankshaft of the combustion engine is changed according to the desired change of the direction of rotation of the crankshaft.

In the reversing mechanism disclosed in British Specification No. 1 408 325 the plain bearings in which reversing cranks are supported may give rise to a rather considerable bearing friction and a correspondingly high resistance against the turning of the cranks during the reversing operation. In some cases this can result in that the reversing cannot be completed because the available working pressure of the hydraulic liquid is insufficient to overcome the resistance. It has therefore been proposed to support the reversing cranks by roller or needle bearings, as disclosed in Danish Specification No. 133 169 whereby the bearing friction becomes so low that this problem is eliminated. There may, however, then occur a different problem in that the supporting surfaces of the bearing races can be permanently deformed due to the high specific contact pressure prevailing between these surfaces and the rolling elements of the bearings during normal operation of the combustion engine when no rotation takes place between the bearings parts which at the same time have to transfer the entire driving torque from the crankshaft of the engine to the control shaft.

According to the present invention the problems mentioned above have been solved by arranging that, in a reversing mechanism of the kind referred to initially, adjacent each end of the main journal pin an annular gap is formed between the cylinder of the hydraulic motor and the main journal pin of the reversing crank and that ducts connecting a chamber located between one bearing of the main journal pin and the adjacent annular gap with the bearings supporting the crank in the sliding shoe, are drilled through the crank.

Through the annular gaps and the drilled ducts all bearings of the reversing crank communicate permanently with both working chambers of the hydraulic motor, and in particular the bearings communicate, during a reversing operation, with that working chamber in which a high hydraulic pressure prevails. Consequently, the bearings will be lubricated, during the reversing operation, by oil at a pressure which substantially exceeds the normal pressure (generally about 1.5 to 2 bar) of the lubricating oil supplied to the control shaft and the further component parts of the reversing mechanism, and it has been found that in this way the friction within the bearings is reduced so much that notwithstanding the somewhat higher consumption of high-pressure oil the reversing proceeds smoothly and without any risk, that the turning of the reversing crank or cranks stops before the operation has been terminated. At the same time the advantages obtained by the relatively high contact area of the plain bearings and the correspondingly low specific contact pressure during normal operation of the combustion engine, when the reversing crank does not move relative to the coupling parts, are retained. The permanent communication between the working chambers of the hydraulic motor and the bearings ensures that also during normal operation of the combustion engine, when the working chambers are connected to the usual lubricating oil system, a sufficient lubricating film will be maintained between the relatively stationary bearing surfaces.

The annular gaps cause a certain leak flow of oil from the high-pressure chamber of the hydraulic motor to the low-pressure chamber thereof, but with a suitable dimensioning of the gap widths and the diameters of the drilled ducts it is possible to restrict this leak flow to a value which is sufficiently low not to jeopardize the completion of the reversing operation.

Each annular gap may be defined between the surface of the main journal pin and a ring secured in the associated end wall of the hydraulic motor and made of a material different from the material of the main journal pin. This feature eliminates the risk of seizure between the opposed surfaces of the journal pin and the rings in case of direct contact between these surfaces, due to elastic deformations in the reversing mechanism during a reversing operation.

The invention will be described in more detail below with reference to the accompanying, somewhat schematic drawings in which

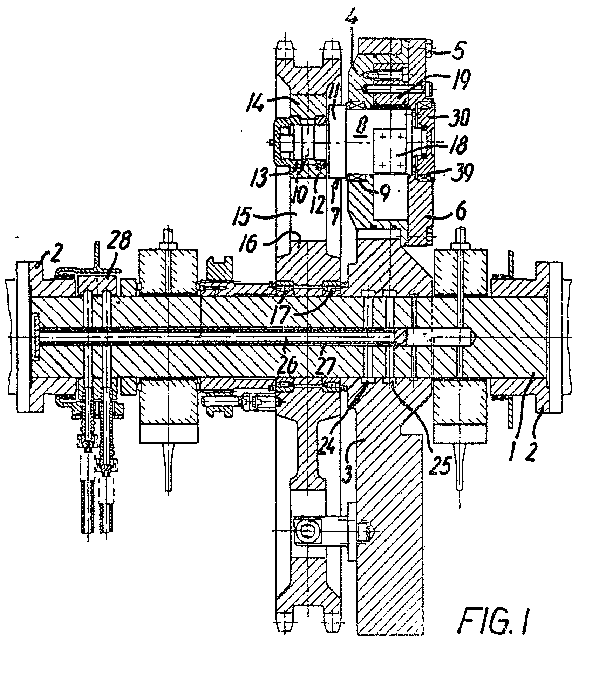

Fig. 1 is an axial section through a reversing mechanism embodying the present invention,

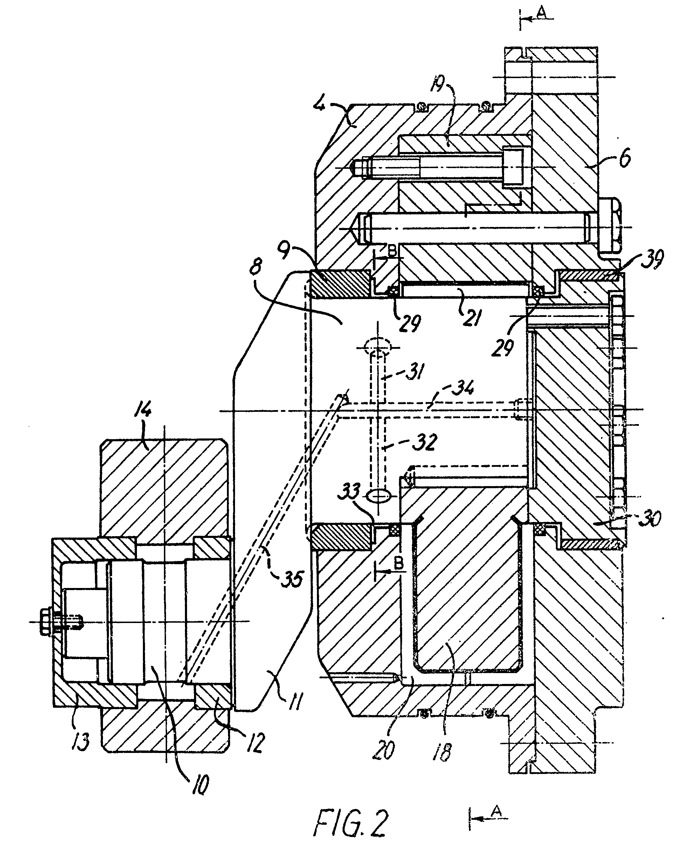

Fig. 2 is a corresponding section on a larger scale through the hydraulic motor of the mechanism,

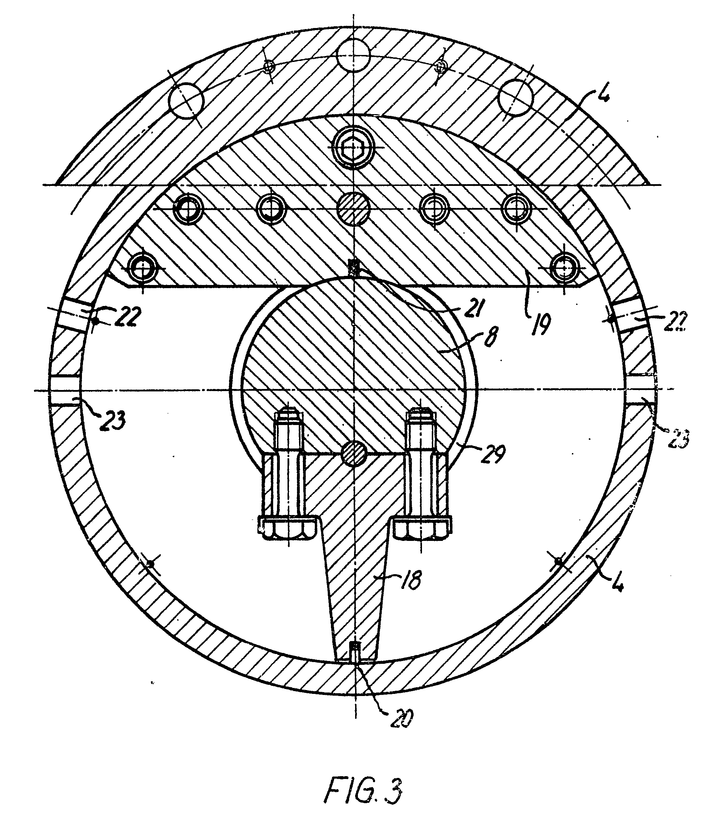

Fig. 3 is a section along line A—A in Fig. 2, and

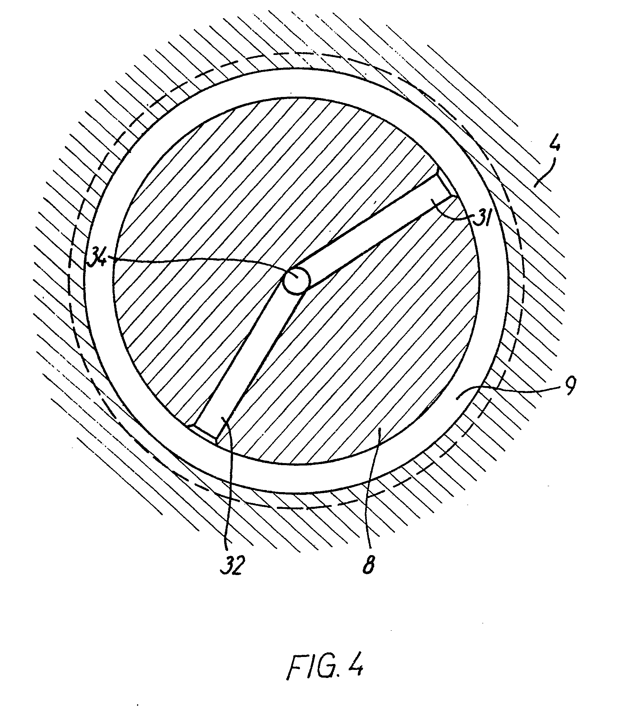

Fig. 4 is a section along line B—B in Fig. 2.

As illustrated in the drawings, a reversing mechanism for a combustion engine (not shown in detail) includes a shaft 1 which in the embodiment shown is relatively short and formed, at its ends, with flanges 2 by means of which the shaft can be secured to the two halves of the control shaft (not further shown) to which there are secured cams for controlling fuel injection pumps and exhaust valves. It is contemplated that the combustion engine is a directly reversible two stroke engine in which the same cams are operative at both directions of rotation, but with different angular positions relative to the crankshaft of the engine.

To shaft 1 there is secured a driver 3 with a bore extending parallel to the shaft and eccentric relative thereto. In this bore a hydraulic cylinder 4 is secured by means of bolts 5 passing through the end cover 6 of the cylinder and a subjacent flange of the cylinder. A reversing crank 7 includes a main journal pin 8 which is supported in the bottom wall of cylinder 4 and in end cover 6 by means of two plain bearings 9 and 39, respectively. Crank 7 also comprises a crank pin 10 offset from pin 8 and connected to this pin by means of an arm 11. By means of two bearing sleeves 12 and 13 secured to pin 10, this pin is supported in a sliding shoe 14, which is radially displaceable within a guide 15 in a sprocket wheel 16. By means of two roller bearings 17 sprocket 16 is rotatably supported on shaft 1 laterally off-set from driver 3. Through one or more chains (not shown) sprocket 16 is drivingly connected to the crankshaft (not shown) of the combustion engine.

To the main journal pin 8 there is secured a radially extending vane or piston 18 which together with a filler piece 19 secured within cylinder 4 defines two working chambers within the cylinder. In the preiphery of filler piece 19 and vane piston 18 there are mounted sealing strips 20 and 21, respectively, for sealing the working chambers from one another.

As shown and described in more detail in the two patent specifications referred to above, each of the two working chambers within cylinder 4 can be connected to a hydraulic source and sink, respectively, through bores 22 and 23 in the wall of the cylinder and alined bores in the driver 3, external oil pipes (not shown), annular distributor grooves 24 and 25 in the boss of driver 3, two coaxial ducts 26 and 27 in shaft 1 and a stuffing box 28. Further details concerning the lost-motion coupling and the system for supplying and returning hydraulic liquid in order to carry out a reversing operation, will appear from said two patent specifications.

At either side of the piston 18 there is provided a barrier ring 29 secured in the cylinder 4 and the end cover 6, respectively, which ring surrounds the main journal pin 8 and the extension 30 thereof, which is supported in cover 6, respectively, with a relatively narrow clearance. In connection with a main journal pin having a diameter of 220 mm the clearance may be about 0.07 to 0.15 mm. Each of two radial bores 31 and 32 in pin 8 opens at one end thereof in an annular chamber 33 between the bearing sleeve 9 and the adjacent barrier ring 29 while the opposite end of each bore opens into an axial bore 34 in the pin. The bore 34 is closed at its end adjacent extension 30 and the opposite end thereof merges into an inclined bore 35 which passes through arm 11 and opens in the surface of crank pin 10 between the two bearing sleeves 12 and 13.

When hydraulic oil at high pressure is supplied, through the control system (not shown) of the hydraulic motor, to one of the two working chambers defined between piston 18 and filler piece 19 within cylinder 4, the piston and hence the reversing crank 7 is rotated, as described in the two aforesaid patent specifications, from one end position thereof to the opposite end position, and due to the slots formed by the barrier rings 29 oil at said high pressure can flow to the two plain bearings 9 and 39 and lubricate these bearings at an increased pressure. From chamber 33 oil may further flow through bores 31, 32, 34, and 35 for lubricating the two bearing sleeves of crank pin 10. When the reversing operation has been completed, the pressure in the operative working chamber of the hydraulic motor is reduced to the usual lubricating oil pressure and said annular slots and bores ensure that also during the periods of operation of the combustion engine between successive reversing operations the bearings will be supplied with lubricating oil.

## Claims

1. Reversing mechanism for a reciprocating combustion engine, such as a ship's engine, having a control shaft to which there are secured cams for controlling the fuel injection and/or valves in the engine cylinders, said reversing mechanism comprising a lost-motion coupling connecting the control shaft to the crankshaft of the engine and including a first coupling part in the form of a driving wheel (16) connected to the crankshaft, a second coupling part in the form of a driver (3) rigidly connected to the control shaft, and at least one rotary piston hydraulic motor mounted in one of the coupling parts with the axis of rotation of the piston arranged eccentrically to the axis of the control shaft, the piston (18) of said hydraulic motor being rigidly connected with the main journal pin (8, 30) of a reversing crank (7), the eccentric crank pin (10) of which is rotatably journalled in a shoe (14) slidingly displaceable within a guideway (15) in the other coupling part, the reversing crank (7) being supported by plain bearings (9, 39; 12, 13) in end walls of the hydraulic motor and in the sliding shoe (14), respectively, characterized in that adjacent each end of the main journal pin (8, 30) an annular gap is formed between the cylinder (4, 6) of the hydraulic motor and the main journal pin (8, 30) of the reversing crank (7) and that ducts (31, 32, 34, 35) connecting a chamber (33) located between one bearing (9) of the main journal pin and the adjacent annular gap with the bearings (12, 13) supporting the crank in the sliding shoe (14), are drilled through the crank (7).

2. Reversing mechanism as claimed in Claim 1, characterized in that each annular gap is defined between the surface of the main journal pin (8, 30) and a ring (29) secured in the associated end wall of the hydraulic motor and made of a material different from the material of the main journal pin.

## Revendications

1. Dispositif d'inversion pour un moteur à combustion à mouvement alternatif, tel un moteur de bateau, ayant un arbre de commande sur lequel sont fixées des cames pour commander l'injection du carburant et/ou des soupapes dans les cylindres, lequel dispositif d'inversion comprend un système d'accouplement à perte de mouvement reliant l'arbre de commande au vilebrequin du moteur et comprenant une première partie d'accouplement matérialisée par une roue d'entraînement (16) reliée au vilebrequin et d'une seconde partie d'accouplement matérialisée par un élément entraîner (3) reliée de façon rigide à l'arbre de commande, et au moins un moteur hydraulique à piston rotatif situé dans l'une des parties d'accouplement, l'axe de rotation du piston étant excentré par rapport a l'axe de l'arbre de commande, le piston (18) dudit moteur hydraulique étant relié au tourillon principal (8, 30) d'un arbre inverseur coudé (7), dont le tourillon excentré (10) est monté rotatif dans un patin (14) coulissant le long d'une glissière (15) dans l'autre partie d'accouplement, l'arbre inverseur coudé (7) étant supporté par des paliers lisses (9, 39; 12, 13) dans les parois d'extrémité du moteur hydraulique et dans le patin coulissant (14) respectivement, caractérisé par le fait qu'à chaque extrémité du tourillon principal (8, 30) un espace annulaire est formé entre le cylindre (4, 6) du moteur hydraulique et le tourillon principal (8, 30) de l'arbre inverseur coudé (7), et par le fait que des conduites (31, 32, 34, 35) reliant une chambre (33) située entre l'un des paliers (9) du tourillon principal et l'espace annulaire adjacent, avec les palier (12, 13) qui supportent le tourillon dans le patin coulissant (14) sont percées dans la masse d l'arbre coudé (7).

2. Dispositif selon la revendication 1, caractérisé par le fait que chaque espace annulaire est défini entre la surface du tourillon principal (8, 30) et une bague (29) fixée dans la paroi d'extrémité correspondante du moteur hydraulique et constituée d'un matériau différent de celui du tourillon principal.

## Patentansprüche

1. Umsteuereinrichtung für eine Hubkolben-Brennkraftmaschine, wie z.B. eine Schiffsmaschine, mit einer Steuerwelle, an der Nocken zur Steuerung der Brennstoffeinspritzung in die und/oder der Ventile in den Zylindern der Brennkraftmaschine befestigt sind, welche Umsteuereinrichtung eine Totgangkupplung umfasst, die die Steuerwelle mit der Kurbelwelle der Brennkraftmaschine verbindet und einen ersten Kupplungsteil in Form eines mit der Kurbelwelle verbundenen Antriebsrades (16), einen zweiten Kupplungsteil in Form eines starr mit der Steuerwelle verbundenen Mitnehmers (3) und wenigstens einen hydraulischen Drehkolbenmotor enthält, der mit exzentrisch zur Achse der Steuerwelle angeordneter Achse seines Drehkolbens (18) in einen der Kupplungsteile eingebaut ist uns dessen Drehkolben (18) starr mit dem Hauptlagerzapfen (8, 30) einer Umsteuerkurbel (7) verbunden ist, deren exzentrischer Kurbelzapfen (10) drehbar gelagert ist in einem Gleitschuh (14), der in einer im anderen Kupplungsteil ausgebildeten Kulissenführung (15) verschieblich ist, und wobei die Umsteuerkurbel (7) durch Gleitlager (9, 39; 12, 13) in Stirnwänden des hydraulischen Drehkolbenmotors bzw. im Gleitschuh (14) unterstützt ist, dadurch gekennzeichnet, dass an jedem Ende des Hauptlagerzapfens (8, 30) zwischen dem Zylinder (4, 6) des Hydraulischen Drehkolbenmotors und dem Hauptlagerzapfen (8, 30) der Umsteuerkurbel (7) ein Ringspalt gebildet ist und dass durch die Umsteuerkurbel (7) Kanäle (31, 32, 34, 35) gebohrt sind, die eine zwischen einem Lager (9) für den Hauptlagerzapfen und dem am nächsten gelegenen Ringsplat befindliche Kammer (33) mit den lagern (12, 13) verbinden, die die Umsteuerkurbel im Gleitschuh (14) unterstützen.

2. Umsteuereinrichtung nach Anspruch 1, dadurch gekennzeichnet, dass jeder Ringspalt zwischen der Oberfläche des Hauptlagerzapfens (8, 30) und einem Ring (29) abgegrenzt ist, der in der zugehörigen Stirnwand des hydraulischen Drehkolbenmotors befestigt ist und aus einem vom Material des Hauptlagerzapfens unterschiedlichen Material besteht.

FIG.1

FIG. 2

FIG. 3

FIG. 4